# EUROPEAN PATENT APPLICATION

(11) **EP 4 112 943 A1**
(43) Date of publication of application: **04.01.2023**
(21) Application number: 20921105.1
(22) Date of filing: 26.02.2020
(51) Int. Cl.: F04D 29/00, F04D 29/02

(54) **AIR BLOWER AND AIR CONDITIONING APPARATUS**

(71) Applicant: MITSUBISHI ELECTRIC CORPORATION, Chiyoda-ku Tokyo 100-8310 (JP)
(72) Inventor: TSUCHIDA Kazuchika, Tokyo 100-8310 (JP); ASO Hiroki, Tokyo 100-8310 (JP); SHIMOKAWA Takaya, Tokyo 100-8310 (JP); TAKAHASHI Ryogo, Tokyo 100-8310 (JP); MORISHITA Daisuke, Tokyo 100-8310 (JP)
(74) Representative: Pfenning, Meinig & Partner mbB
(86) International application number: PCT/JP2020/007851
(87) International publication number: WO 2021/171443

(57) **Abstract**

A fan includes a rotor having a shaft, a rotor core having an annular shape about a center axis of the shaft, and a permanent magnet fixed to the rotor core, the permanent magnet forming a magnet magnetic pole, a part of the rotor core forming a virtual magnetic pole, a stator surrounding the rotor from outside in a radial direction about the center axis, a rotating blade fixed to the shaft and formed of a nonmagnetic material, and a frame surrounding the stator from outside in the radial direction and formed of a nonmagnetic material.

## Description

### TECHNICAL FIELD

The present disclosure relates to a fan and an air conditioner.

### BACKGROUND ART

A fan includes a motor, a rotating blade fixed to a shaft of the motor, and a frame covering the motor. Some motors have a consequent pole rotor that includes a magnet magnetic pole formed by a permanent magnet and a virtual magnetic pole formed by a rotor core (see, for example, Patent Reference 1).

### PRIOR ART REFERENCE

### PATENT REFERENCE

Patent Reference 1: WO 2018/179025 (see FIGS. 1 and 2)

### SUMMARY OF THE INVENTION

### PROBLEM TO BE SOLVED BY THE INVENTION

In the consequent pole rotor, the virtual magnetic pole has no permanent magnet, and thus part of the magnetic flux exiting from the magnet magnetic pole is more likely to flow to the shaft. The magnetic flux flowing to the shaft may further flow to the frame via a bearing, and leak to the outside of the fan.

Magnetic flux leakage to the outside of the fan causes a defect of peripheral members of the fan, such as distortion of a casing of an outdoor unit that houses the fan. In addition, in order to meet the International Air Transport Association (IATA) standards, it is necessary to reduce the magnetic flux leakage to the outside of the fan.

The present disclosure is made to solve the above-described problem, and an object of the present disclosure is to reduce magnetic flux leakage to the outside of a fan.

### MEANS OF SOLVING THE PROBLEM

A fan of the present disclosure includes a rotor having a shaft, a rotor core having an angular shape about a center axis of the shaft, and a permanent magnet fixed to the rotor core, the permanent magnet forming a magnet magnetic pole, a part of the rotor core forming a virtual magnetic pole, a stator surrounding the rotor from outside in a radial direction about the center axis, a rotating blade fixed to the shaft and formed of a nonmagnetic material, and a frame covering the stator from outside in the radial direction and formed of a nonmagnetic material.

### EFFECTS OF THE INVENTION

According to the present disclosure, the frame and the rotating blade are each formed of a nonmagnetic material, and thus magnetic flux leakage to the outside of the fan can be reduced.

### BRIEF DESCRIPTION OF THE DRAWINGS

FIG. 1 is a longitudinal-sectional view illustrating a fan of a first embodiment.
FIG. 2 is a cross-sectional view illustrating a motor of the first embodiment.
FIG. 3 is a cross-sectional view illustrating a rotor of the first embodiment.
FIG. 4 is a graph illustrating the magnetic flux distribution on the surface of the rotor of the first embodiment.
FIG. 5 is a diagram illustrating the flow of leakage magnetic flux in a fan of a comparative example.
FIG. 6 is a diagram illustrating the flow of leakage magnetic flux in the fan of the first embodiment.
FIG. 7 is a diagram illustrating heat transfer paths in the fan of the first embodiment.
FIG. 8 is a diagram illustrating a bearing in the fan of the first embodiment.
FIG. 9 is a diagram illustrating the function of a heat dissipation member of the first embodiment.
FIGS. 10(A) and 10(B) are diagrams illustrating the relationship between a heat transfer member and a rotating blade in the first embodiment.
FIG. 11 is a diagram illustrating another configuration example of the heat transfer member of the first embodiment.
FIGS. 12(A) and 12(B) are perspective views illustrating other configuration examples of the heat transfer member of the first embodiment.
FIG. 13 is a diagram illustrating a stream of airflow in the fan of the first embodiment.
FIG. 14 is a longitudinal-sectional view illustrating a fan of a second embodiment.
FIG. 15 is a cross-sectional view illustrating a rotor of a third embodiment.
FIG. 16 is a diagram illustrating an air conditioner to which the fan of any of the first to third embodiments is applicable.
FIG. 17 is a sectional view illustrating an outdoor unit of the air conditioner illustrated in FIG. 16.

### MODE FOR CARRYING OUT THE INVENTION

### FIRST EMBODIMENT

### (Configuration of Fan)

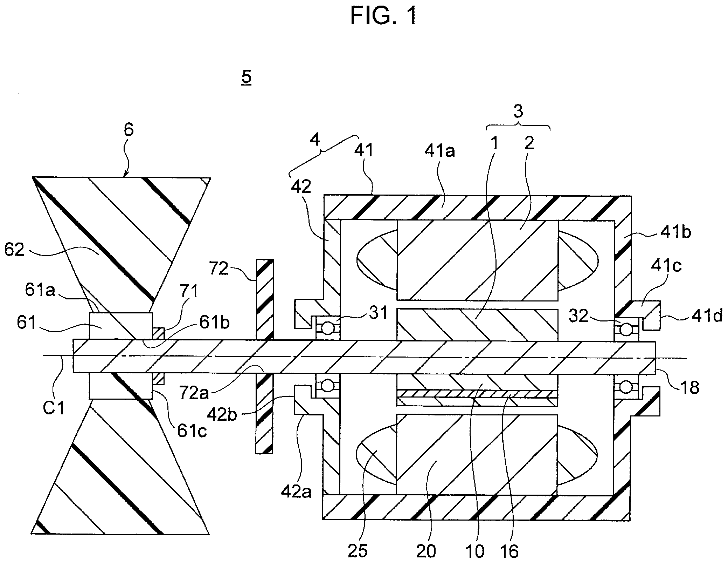

FIG. 1 is a longitudinal-sectional view illustrating a fan 5 of a first embodiment. The fan 5 includes a motor 3 with a shaft 18, a motor housing 4 to house the motor 3, and a rotating blade 6 fixed to the shaft 18 of the motor 3.

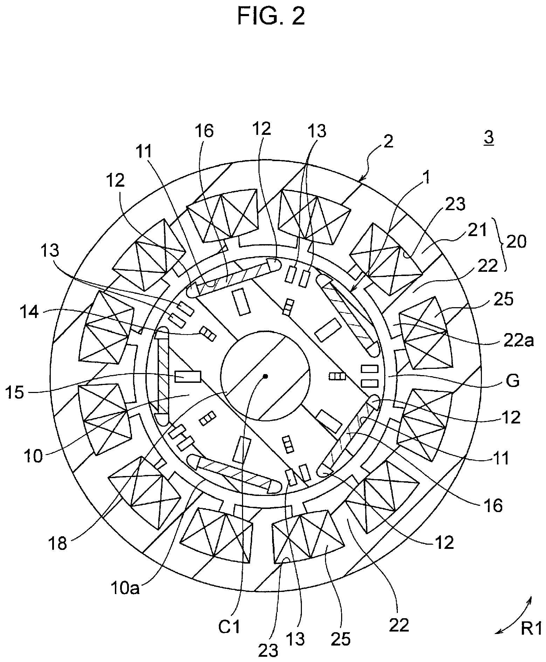

Hereinafter, a direction of an axis C1, which is the center axis of the shaft 18, is referred to as an "axial direction". A circumferential direction about the axis C1 is referred to as a "circumferential direction", and indicated by the arrow R1 in FIG. 2 and other figures. A radial direction about the axis C1 is referred to as a "radial direction". A sectional view in a plane parallel to the axial direction is referred to as a "longitudinal-sectional view". A sectional view in a plane orthogonal to the axial direction is referred to as a "cross-sectional view".

The motor 3 is a permanent-magnet synchronous motor. The motor 3 includes a rotor 1 having the shaft 18 and a stator 2 surrounding the rotor 1 from outside in the radial direction. The specific configuration of the motor 3 will be described later.

The motor housing 4 has a bottomed cylindrical frame 41 and a bearing support portion 42 as a first bearing support portion fixed to an opening of the frame 41.

The frame 41 has a cylindrical wall 41a that surrounds the stator 2 from outside in the radial direction and a side wall 41b as a second bearing support portion formed at an end of the cylindrical wall 41a in the axial direction. The cylindrical wall 41a is formed in a cylindrical shape about the axis C1. The stator 2 is housed inside the cylindrical wall 41a.

The side wall 41b is a disk-shaped portion that extends in a plane orthogonal to the axial direction. An annular portion 41c is formed at a center of the side wall 41b in the radial direction. The annular portion 41c holds a bearing 32 as a second bearing from outside in the radial direction. The annular portion 41c has an end surface portion 41d that is in contact with an end surface of the bearing 32 in the axial direction.

The bearing support portion 42 faces the side wall 41b of the frame 41 in the axial direction. The bearing support portion 42 is a disk-shaped member that extends in a plane orthogonal to the axial direction. The bearing support portion 42 is fixed to the opening at an end of the frame 41 in the axial direction, for example, by a press fitting.

An annular portion 42a is formed at a center of the bearing support portion 42 in the radial direction. The annular portion 42a holds a bearing 31 as a first bearing from outside in the radial direction. The annular portion 42a has an end surface portion 42b that is in contact with an end surface of the bearing 31 in the axial direction.

The frame 41 is formed of a nonmagnetic material. The frame 41 is formed of, for example, a resin, more specifically, a thermosetting resin such as a bulk molding compound (BMC).

The bearing support portion 42 is formed of a magnetic material such as iron, but may be formed of a nonmagnetic material as is the case with the frame 41.

The shaft 18 of the rotor 1 is made of iron or stainless steel. The shaft 18 is rotatably supported by the bearing 31 held by the bearing support portion 42 and the bearing 32 held by the side wall 41b of the frame 41.

The shaft 18 passes through the bearing support portion 42 in the axial direction and protrudes to the left side in FIG. 1. The rotating blade 6 is fixed to a tip end of the shaft 18 in the protruding direction.

The rotating blade 6 has a hub 61 fixed to the shaft 18 and a plurality of blades 62 fixed to the hub 61. The hub 61 has an outer circumferential surface 61a and an inner circumferential surface 61b, both of which are cylindrical surfaces. The inner circumferential surface 61b of the hub 61 is fixed to the shaft 18.

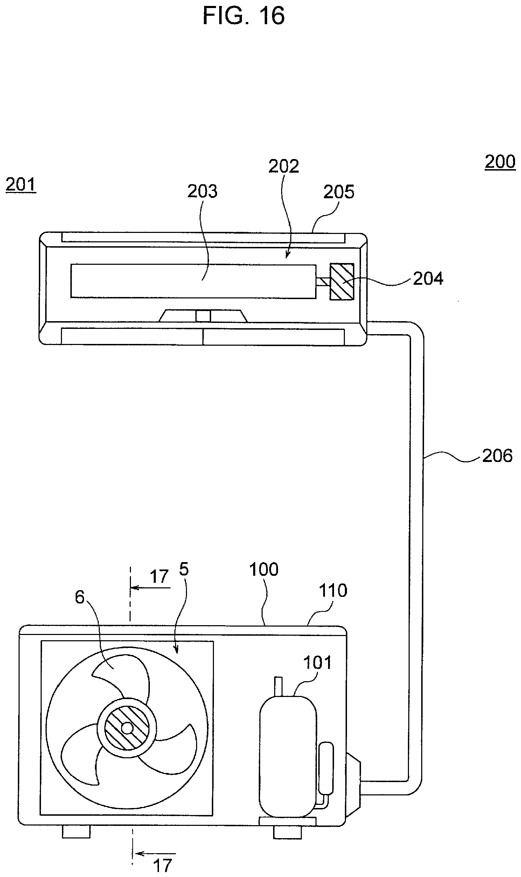

At the outer circumferential surface 61a of the hub 61, the plurality of blades 62 are arranged at equal intervals in the circumferential direction. The number of blades 62 is, for example, three (see FIG. 16), but only needs to be two or more. When the rotating blade 6 rotates together with the shaft 18, the blades 62 generate airflow in the axial direction.

The rotating blade 6 is formed of a nonmagnetic material. Specifically, the rotating blade 6 is made of a resin. The rotating blade 6 is made of, for example, a resin, more specifically, polypropylene (PP) to which glass fiber and mica are added. Polyphenylene sulfide (PPS) may be used in place of polypropylene.

A heat dissipation member 72 is disposed between the rotating blade 6 and the motor housing 4 in the axial direction. The heat dissipation member 72 has, for example, a disk shape. A center hole 72a to which the shaft 18 is fixed is formed at a center of the heat dissipation member 72. The heat dissipation member 72 is formed of, for example, a rubber, more specifically, nitrile rubber.

The heat dissipation member 72 is located in a flow path of the airflow generated by the rotation of the rotating blade 6. As described later, heat transferred from the motor 3 to the shaft 18 is then transferred to the heat dissipation member 72 which is in contact with the shaft 18. The airflow generated by rotation of the rotating blade 6 passes through the heat dissipation member 72, thereby dissipating heat from the heat dissipation member 72. An outer diameter of the heat dissipation member 72 is smaller than an outer diameter of the motor housing 4 so that the heat dissipation member 72 does not obstruct the airflow for cooling the motor housing 4.

A heat transfer member 71 is provided on the shaft 18 so that the heat transfer member 71 is in contact with the rotating blade 6. In this example, the heat transfer member 71 is a member having an annular shape about the axis C1 and is fixed to an outer circumference of the shaft 18. The heat transfer member 71 is formed of a metal such as iron, stainless steel, or aluminum. The heat transfer member 71 may be formed as an e-ring.

The heat transfer member 71 is in contact with an end surface of the hub 61 of the rotating blade 6 orthogonal to the axial direction, more specifically, an end surface 61c of the hub 61 on the side facing the motor housing 4. The heat transfer member 71 is in contact with both the shaft 18 and the rotating blade 6 and has a function of transferring heat from the shaft 18 to the rotating blade 6.

### (Configuration of Motor)

FIG. 2 is a cross-sectional view illustrating the motor 3. The motor 3 includes the rotor 1 that is rotatable and the annular stator 2 provided to surround the rotor 1. The motor 3 is a permanent-magnet embedded motor that has permanent magnets 16 embedded in the rotor 1. An air gap G of, for example, 0.4 mm, is provided between the stator 2 and the rotor 1.

### (Configuration of Stator)

The stator 2 includes a stator core 20 and a coil 25 wound on the stator core 20. The stator core 20 is formed of a plurality of electromagnetic steel sheets which are stacked in the axial direction and fixed together by crimping or the like. The sheet thickness of each electromagnetic steel sheet is, for example, 0.2 mm to 0.5 mm.

The stator core 20 has a yoke 21 having an annular shape about the axis C1 and a plurality of teeth 22 extending inward in the radial direction from the yoke 21. The teeth 22 are arranged at equal intervals in the circumferential direction. The number of teeth 22 is 12 in this example, but is not limited to 12. A slot, which is a space to accommodate the coil 25, is formed between adjacent teeth 22.

A tip end 22a of the tooth 22 on the inner side in the radial direction has a greater width in the circumferential direction than other portions of the tooth 22. The tip end 22a of the tooth 22 faces an outer circumference of the rotor 1 via the air gap described above.

An insulating portion made of polybutylene terephthalate (PBT) or the like is fixed to the stator core 20. The coil 25 is wound around the tooth 22 via the insulating portion. The coil 25 is made of copper or aluminum. The coil 25 may be wound around each tooth 22 (concentrated winding) or may be wound across a plurality of teeth 22 (distributed winding).

### (Configuration of Rotor)

As illustrated in FIG. 2, the rotor 1 includes the shaft 18, a rotor core 10 fixed to the shaft 18, and a plurality of permanent magnets 16 embedded in the rotor core 10.

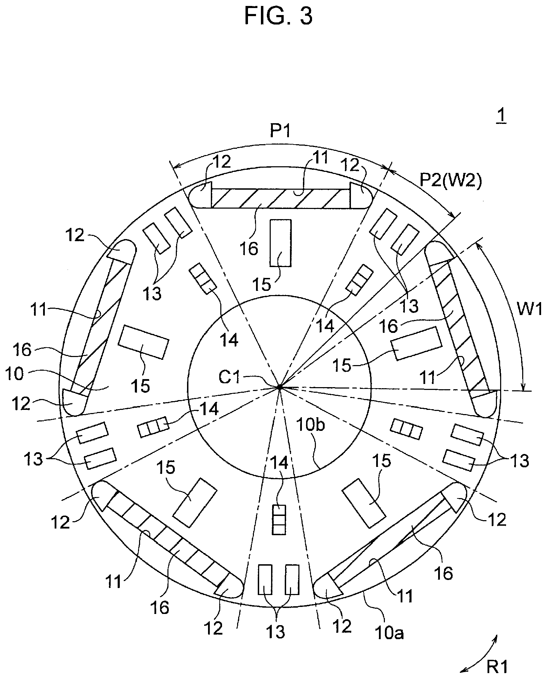

FIG. 3 is a diagram illustrating the rotor core 10 and the permanent magnets 16 of the rotor 1. The rotor core 10 is a member having an annular shape about the axis C1. The rotor core 10 has an outer circumference 10a and an inner circumference 10b, both of which are annular. The rotor core 10 is formed of a plurality of electromagnetic steel sheets which are stacked in the axial direction and fixed together by crimping or the like. The sheet thickness of each electromagnetic steel sheet is, for example, 0.2 mm to 0.5 mm.

The rotor core 10 has a plurality of magnet insertion holes 11. The magnet insertion holes 11 are arranged at equal intervals in the circumferential direction and at the same distance from the axis C1. The number of magnet insertion holes 11 is five in this example. The magnet insertion holes 11 are formed along the outer circumference 10a of the rotor core 10.

The magnet insertion hole 11 extends linearly in a direction orthogonal to a straight line (referred to as a magnetic pole center line) in the radial direction that passes through a pole center, i.e., a center of the magnetic insertion hole in the circumferential direction. In this regard, the magnet insertion hole 11 is not limited to such a shape, but may extend in a V shape, for example.

A flux barrier 12, which is a hole, is formed at each end of the magnet insertion hole 11 in the circumferential direction. A thin wall portion is formed between the flux barrier 12 and the outer circumference 10a of the rotor core 10. In order to suppress the leakage magnetic flux between adjacent magnetic poles, it is desirable that the thickness of the thin wall portion is the same as the sheet thickness of each of the electromagnetic steel sheets constituting the rotor core 10.

The permanent magnet 16 is inserted in each magnet insertion hole 11. The permanent magnet 16 has a flat plate shape. The permanent magnet 16 has a rectangular cross sectional shape in a plane orthogonal to the axial direction. The permanent magnet 16 is made of a rare earth magnet. More specifically, the permanent magnet 16 is made of a neodymium sintered magnet containing Nd (neodymium)-Fe (iron)-B (boron).

The permanent magnets 16 are arranged so that the same magnetic poles (for example, the N poles) face the outer circumference 10a side of the rotor core 10. In the rotor core 10, a magnetic pole (for example, the S pole) opposite to the permanent magnets is formed in a region between the permanent magnets adjacent in the circumferential direction.

Thus, five magnet magnetic poles P1 formed by the permanent magnets 16 and five virtual magnetic poles P2 formed by the rotor core 10 are formed in the rotor 1. This configuration is referred to as a consequent pole type. Hereinafter, when the term "magnetic pole" is simply used, it refers to either the magnet magnetic pole P1 or the virtual magnetic pole P2. The rotor 1 has 10 magnetic poles.

In the consequent pole rotor 1, the number of permanent magnets 16 can be halved as compared with a non-consequent pole rotor having the same number of magnetic poles. Since the number of permanent magnets 16 which are expensive is small, the manufacturing cost of the rotor 1 is reduced.

Although the number of magnetic poles of the rotor 1 is 10 in this example, the number of magnetic poles only needs to be an even number of four or more. Although one permanent magnet 16 is disposed in each magnet insertion hole 11 in this example, two or more permanent magnets 16 may be disposed in each magnet insertion hole 11. It is also possible that the magnet magnetic poles P1 are S poles and the virtual magnetic poles P2 are N poles.

The rotor core 10 has, in the virtual magnetic pole P2, at least one slit 13 elongated in the radial direction. The slit 13 has a function of rectifying the flow of magnetic flux, which passes through the virtual magnetic pole P2, in the radial direction. In this regard, it is not necessary to form the slit 13 in the virtual magnetic pole P2.

The rotor core 10 has cavity portions 15 on the inner sides of the magnet insertion holes 11 in the radial direction. Each cavity portion 15 is provided to uniformize the flow of magnetic flux in the circumferential direction, on the inner side of the magnet insertion hole 11 in the radial direction. The cavity portion 15 has a slit shape elongated in the radial direction. In this regard, the shape of the cavity portion 15 is not limited to the slit shape, but may be a circular shape or other shapes.

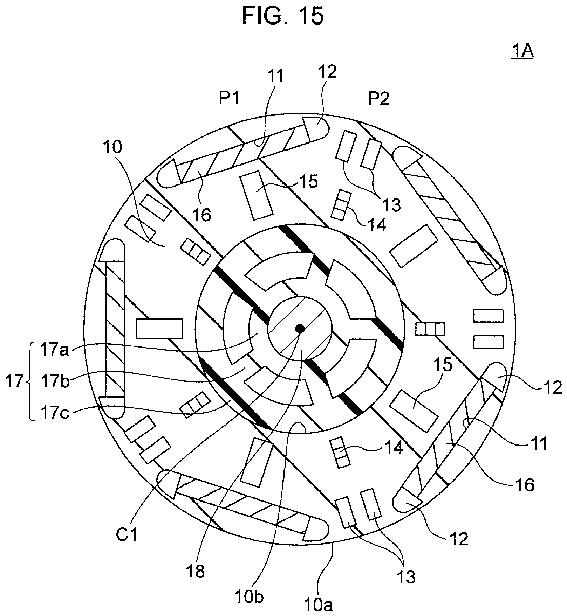

The shaft 18 (FIG. 2) is fitted into the inner circumference 10b of the rotor core 10. A resin portion may be provided between the inner circumference 10b of the rotor core 10 and the shaft 18 (see FIG. 15 as described later).

A width W2 of the virtual magnetic pole P2 in the circumferential direction is narrower than a width W1 of the permanent magnet 16 in the circumferential direction. The magnetic flux density at the virtual magnetic pole P2 increases because much magnetic flux exiting from the permanent magnet 16 passes through the narrow virtual magnetic pole P2. That is, a reduction in the magnetic flux density due to absence of the permanent magnet in the virtual magnetic pole P2 can be compensated for by narrowing the width W2 of the virtual magnetic pole P2.

### (FUNCTION)

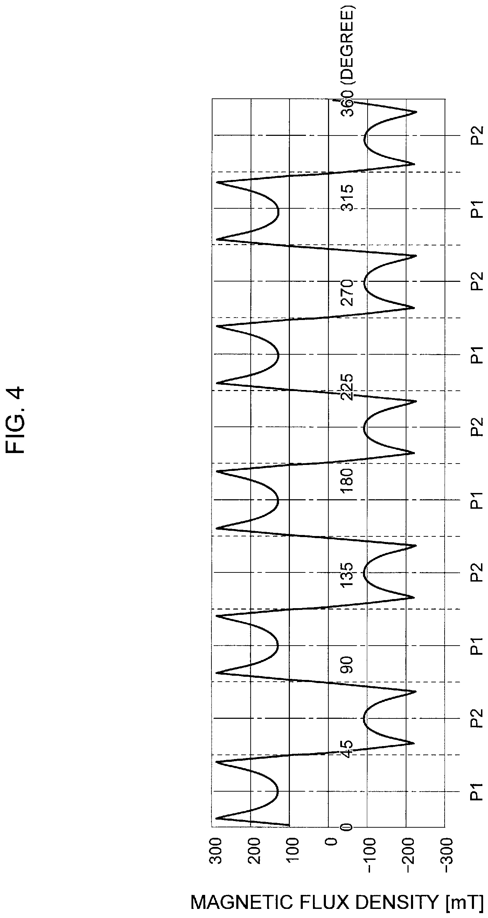

Next, the function of the first embodiment will be described. FIG. 4 is a graph illustrating the magnetic flux density distribution on the outer circumference of the rotor 1, obtained by actual measurement of the magnetic flux density. The vertical axis indicates the magnetic flux density [mT], while the horizontal axis indicates the position in the circumferential direction, i.e., an angle [degrees] about the axis C1.

As illustrated in FIG. 4, the magnetic flux density reaches a positive peak at the magnet magnetic pole P1 and a negative peak at the virtual magnetic pole P2. The reason why the magnetic flux density decreases at the pole center of the magnet magnetic pole P1 while the magnetic flux density increases at the pole center of the virtual magnetic pole P2 is that the magnetic flux flows symmetrically with respect to each pole center.

An absolute value of the magnetic flux density at the virtual magnetic pole P2 is smaller than an absolute value of the magnetic flux density at the magnet magnetic pole P1. This is because the virtual magnetic pole P2 has no permanent magnet 16.

In the consequent pole rotor 1, since the virtual magnetic pole P2 has no permanent magnet 16, the magnetic flux is more likely to flow toward the center of the rotor core 10. The magnetic flux flowing toward the center of the rotor core 10 then flows into the shaft 18, i.e., leakage magnetic flux occurs.

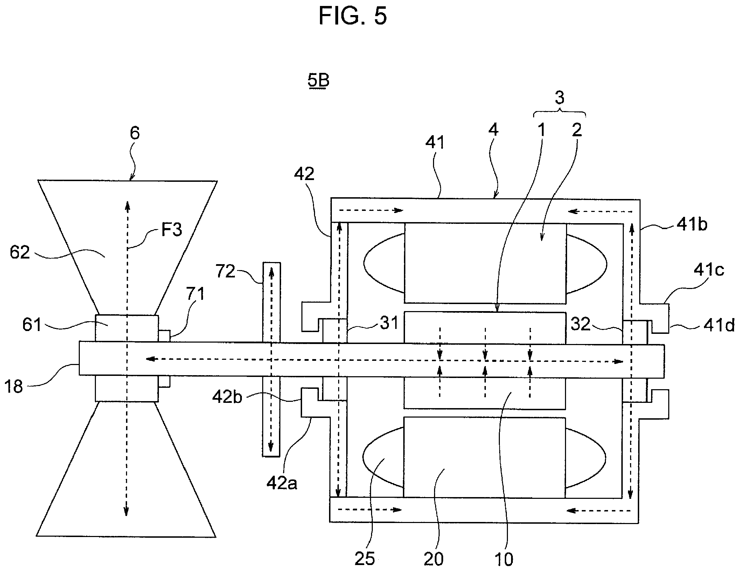

FIG. 5 is a diagram illustrating paths of leakage magnetic flux in a fan 5B of a comparative example. In the fan 5B of the comparative example, the motor housing 4 and the rotating blade 6 are each formed of a magnetic material. In this case, the leakage magnetic flux flowing from the rotor core 10 to the shaft 18 further flows from the shaft 18 to the bearing support portion 42 through the bearing 31 and also flows to the frame 41 through the bearing 32.

That is, the magnetic flux leakage to the outside of the fan 5 is more likely to occur when the motor housing 4 and the rotating blade 6 are each formed of a magnetic material.

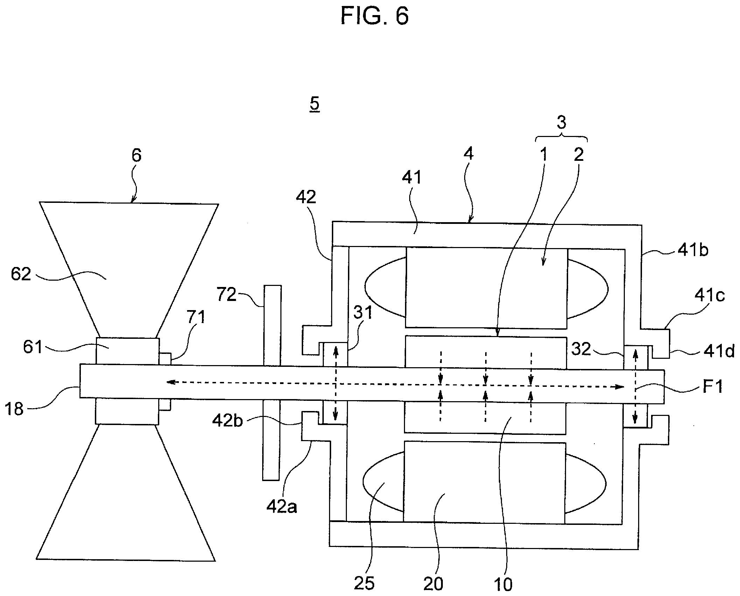

FIG. 6 is a diagram illustrating paths of leakage magnetic flux in the fan 5 of the first embodiment. In the first embodiment, the motor housing 4 and the rotating blade 6 are each formed of a nonmagnetic material. Thus, the leakage magnetic flux flowing from the rotor core 10 to the shaft 18 does not flow beyond the shaft 18 and bearings 31 and 32, and does not flow to the motor housing 4 and the rotating blade 6.

In this way, in the first embodiment, the magnetic flux leakage to the outside of the fan 5 is suppressed since the motor housing 4 and the rotating blade 6 are each formed of a nonmagnetic material. Since each of the motor housing 4 and the rotating blade 6 has a large surface area, the suppressing effect of leakage magnetic flux is especially high when the motor housing 4 and the rotating blade 6 are each formed of the nonmagnetic material.

Thus, a defect of peripheral members due to magnetic flux leakage to the outside of the fan 5 can be suppressed. Further, the IATA standards can be satisfied.

Meanwhile, typical examples of the nonmagnetic materials forming the motor housing 4 and the rotating blade 6 are resins. That is, the motor housing 4 is formed of, for example, BMC. The rotating blade 6 is formed of, for example, polypropylene.

In general, resins have lower thermal conductivity than metals. Thus, when the motor housing 4 and the rotating blade 6 are each formed of a resin, heat generated in the motor 3 or bearings 31 and 32 is less likely to be dissipated to the outside of the fan 5. Hereinafter, the configuration of the fan 5 for heat dissipation will be described.

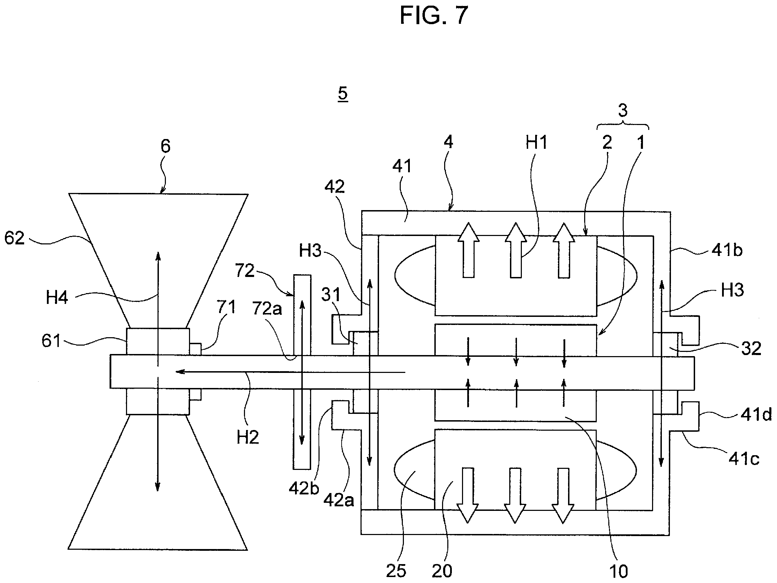

FIG. 7 is a schematic diagram for explaining the flow of heat in the fan 5. A first heat source in the fan 5 is the stator 2. In the stator 2, heat is generated by the current flowing through the coil 25 of the stator 2, and iron loss is generated by the magnetic flux of the permanent magnet 16 that interlinks with the stator core 20.

A second heat source is the rotor 1. In the rotor 1, eddy current loss is generated in the permanent magnet 16, and iron loss is generated by the magnetic flux of the permanent magnet 16 that interlinks with the rotor core 10.

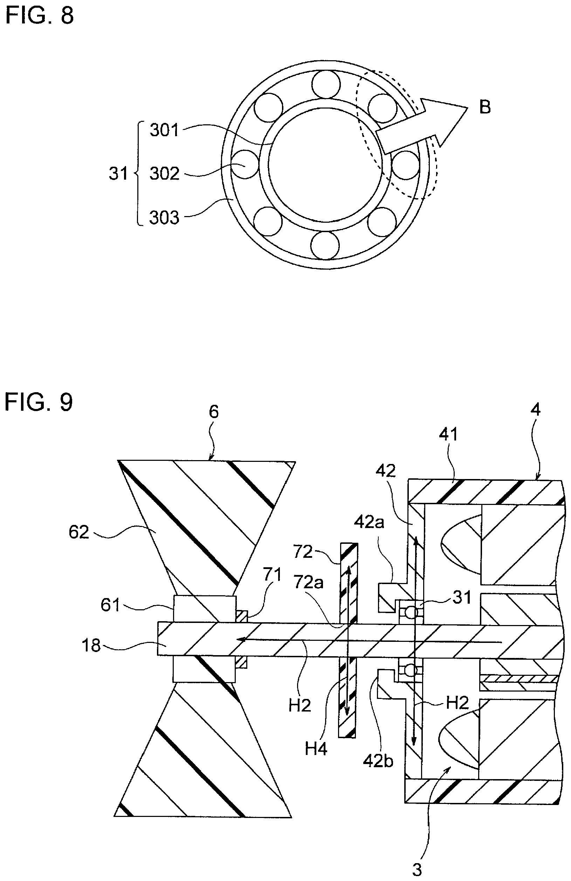

A third heat source is the bearings 31 and 32. FIG. 8 is a schematic diagram illustrating the structure of the bearing 31. The bearing 31 has an inner ring 301, an outer ring 302, and a plurality of rolling elements 303 between the rings 301 and 302. The inner ring 301 is fixed to the shaft 18. The outer ring 302 is held by the bearing support portion 42. The rolling element 303 is a ball, for example.

As illustrated in FIG. 3, in the rotor 1, the magnet magnetic pole P1 and the virtual magnetic pole P2 face each other across the axis C1. The magnetic flux density at the magnet magnetic pole P1 of the rotor 1 is higher than the magnetic flux density at the virtual magnetic pole P2 (see FIG. 4). Thus, the force acting between the magnet magnetic pole P1 and the tooth 22 is greater than the force acting between the virtual magnetic pole P2 and the tooth 22, and an excitation force in the radial direction is applied to the rotor 1.

The excitation force in the radial direction applied to the rotor 1 acts on the bearing 31 fixed to the shaft 18 as indicated by the arrow B in FIG. 8. In other words, the friction between the rolling element 303 and the inner ring 301 and the friction between the rolling element 303 and the outer ring 302 partially increase, so that the frictional heat increases. The same goes for the other bearing 32. Thus, the bearings 31 and 32 serve as the third heat source.

With reference to FIG. 7 again, the thermal energy generated in the stator 2 is the largest among the stator 2, the rotor 1, and the bearings 31 and 32. The thermal energy generated in the rotor 1 and the bearings 31 and 32 is relatively small.

The heat generated in the stator 2 flows to the frame 41 in contact with the outer circumference of the stator 2, as indicated by the arrows H1. Part of the heat flowing to the frame 41 also flows to the bearing support portion 42.

The heat generated in the bearings 31 and 32 flows to the bearing support portion 42 and the side wall 41b as indicated by the arrows H3. The heat generated in the bearings 31 and 32 also flows to the shaft 18 as indicated by the arrow H2. The heat generated in the rotor 1 flows to the shaft 18 as indicated by the arrow H2.

The heat flowing to the shaft 18 flows to the bearing support portion 42 through the bearing 31 and also flows to the side wall 41b through the bearing 32. The heat flowing to the shaft 18 also flows to the rotating blade 6.

The frame 41, the bearing support portion 42, and the rotating blade 6 serve as heat dissipation members that dissipate heat generated in the heat sources. In particular, the frame 41 and the rotating blade 6 have large heat dissipation areas, and thus have high heat dissipation effect.

As described above, the thermal energy generated in the stator 2 is the largest among the heat sources in the fan 5. For this reason, the frame 41 is made of a material with higher thermal conductivity than the rotating blade 6. For example, the frame 41 is formed of BMC, and the thermal conductivity of BMC is 0.8 W/m·K. The rotating blade 6 is made of polypropylene to which 20 wt% of glass fiber and 10 wt% of mica are added, and the thermal conductivity of this material is 0.4 W/m·K.

Since the frame 41 is made of the material with high thermal conductivity as above, the heat generated in the stator 2 can be dissipated efficiently.

As illustrated in FIG. 9, the heat dissipation member 72 is provided between the motor housing 4 and the rotating blade 6. The heat dissipation member 72 is formed of a rubber such as nitrile rubber. The thermal conductivity of nitrile rubber is 0.25 W/m·K. The shaft 18 is fitted into the center hole 72a of the heat dissipation member 72.

The heat flowing from the rotor 1 and bearings 31 and 32 to the shaft 18 flows from the shaft 18 to the heat dissipation member 72 as indicated by the arrows H4. The rotation of the rotating blade 6 generates airflow passing through the heat dissipation member 72, and thus the heat flowing from the shaft 18 to the heat dissipation member 72 can be dissipated.

Frictional heat is generated in the bearings 31 and 32 by the excitation force in the radial direction as described with reference to FIG. 8. In addition, due to the weight of the rotating blade 6, a moment about the bearing 32 as a fulcrum acts on the bearing 31 which is located on the side closer to the rotating blade 6. Consequently, the bearing 31 generates more frictional heat than the bearing 32.

Since the heat dissipation member 72 is disposed adjacent to the bearing 31, the frictional heat of the bearing 31 can be dissipated efficiently via the shaft 18 and the heat dissipation member 72.

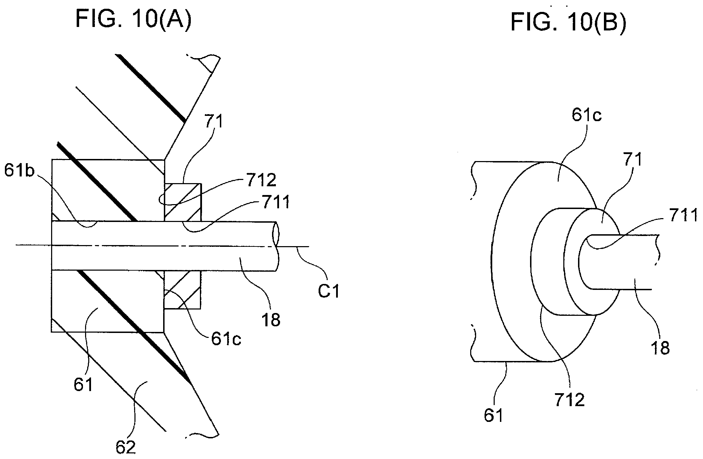

The heat transfer member 71 is fixed to the shaft 18 so that the heat transfer member 71 is in contact with the rotating blade 6. FIGS. 10(A) and 10(B) are a sectional view and a perspective view showing contact portions of the heat transfer member 71 with the shaft 18 and the rotating blade 6.

The heat transfer member 71 is a member having an annular shape about the axis C1. The heat transfer member 71 has an inner circumferential surface 711 in contact with an outer circumferential surface of the shaft 18 and a side end surface 712 in contact with the end surface 61c of the rotating blade 6 on the motor housing 4 side.

Thus, heat of the shaft 18 does not only flow to the rotating blade 6 directly from the shaft 18, but also flows to the rotating blade 6 through the inner circumferential surface 711 and the side end surface 712 of the heat transfer member 71. With the heat transfer member 71, a heat transfer path between the shaft 18 and the rotating blade 6 can be enlarged.

The heat transfer member 71 is in contact with the shaft 18 and the rotating blade 6, and improves the efficiency of the heat transfer to the rotating blade 6. For this reason, the heat transfer member 71 is formed of a material with higher thermal conductivity than the heat dissipation member 72. Specifically, the heat transfer member 71 is made of a metal such as iron, stainless steel, or aluminum. The thermal conductivity of iron is 83 W/m·K. The thermal conductivity of aluminum is 236 W/m·K.

The shape of the heat transfer member 71 is not limited to an annular shape, but may be any shape as long as the heat transfer member 71 has a surface in contact with the shaft 18 and a surface in contact with the rotating blade 6.

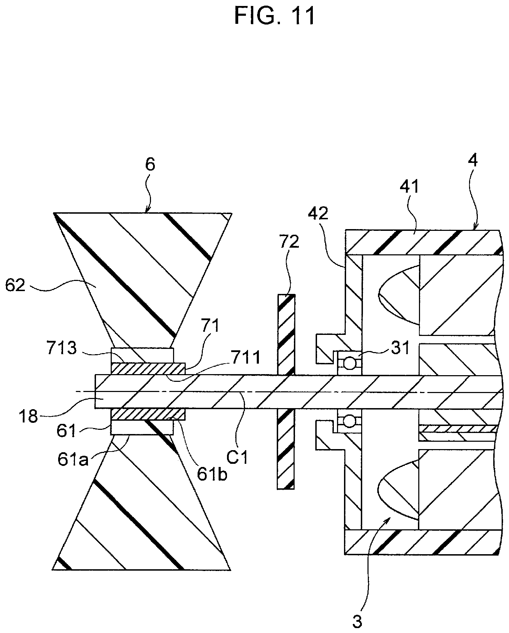

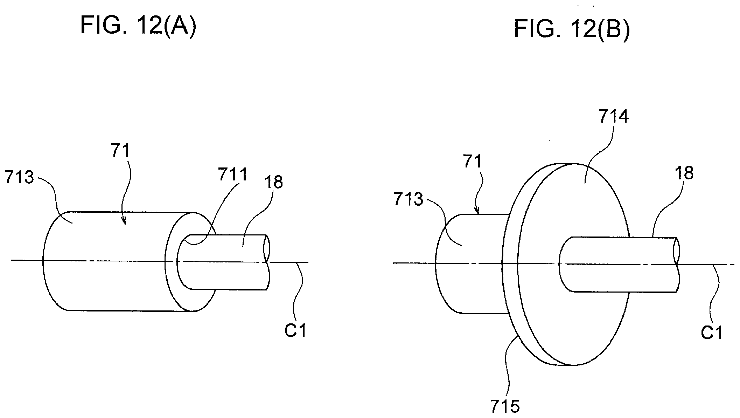

FIG. 11 is a sectional view illustrating another configuration example of the cylindrical heat transfer member 71. FIG. 12(A) is a perspective view illustrating the heat transfer member 71. The heat transfer member 71 illustrated in FIGS. 11 and 12(A) has a cylindrical shape. In this case, the heat transfer member 71 can be disposed between the outer circumference of the shaft 18 and the inner circumferential surface 61b of the hub 61 of the rotating blade 6.

The heat of the shaft 18 flows to the rotating blade 6 through the inner circumferential surface 711 and an outer circumferential surface 713 of the heat transfer member 71. Thus, the heat transfer path from the shaft 18 to the rotating blade 6 can be further enlarged.

As illustrated in FIG. 12(B), a fringe 714 in contact with the end surface 61c of the hub 61 may be provided at one end of the heat transfer member 71 in the axial direction. With this arrangement, the heat transfer path from the shaft 18 to the rotating blade 6 can be further enlarged.

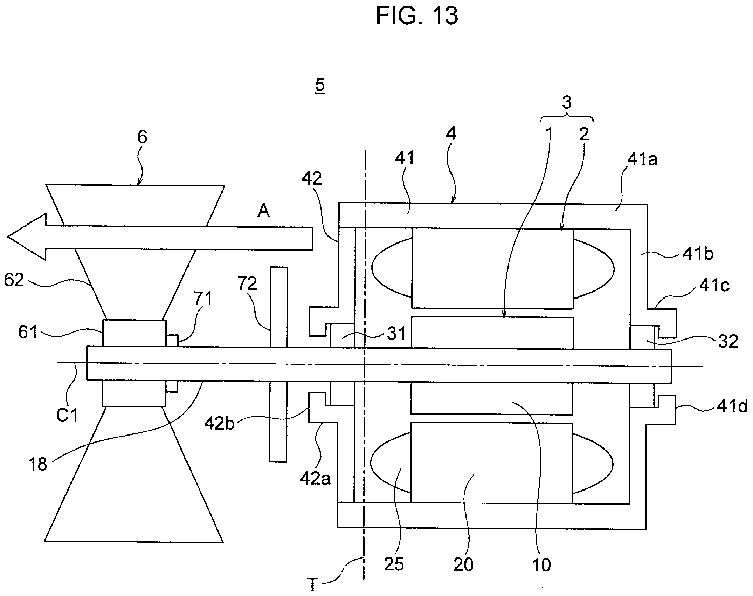

FIG. 13 is a schematic diagram for explaining the airflow in the fan 5. The rotation of the rotating blade 6 generates the airflow directed from the motor housing 4 to the rotating blade 6. As described above, the heat sources of the fan 5 are the stator 2, the rotor 1, and the bearings 31 and 32. Thus, the heat sources are located concentratedly on the motor housing 4 side in the axial direction (the right side with respect to a virtual line T illustrated in FIG. 13) and are not located on the rotating blade 6 side.

If the airflow flows from the rotating blade 6 toward the motor housing 4, the air heated by the rotating blade 6 passes through the motor housing 4, and thus heat of the motor housing 4 is not sufficiently dissipated.

With a configuration in which the airflow flows from the motor housing 4 toward the rotating blade 6, the low-temperature air which is not heated passes through the motor housing 4, so that the heat transferred to the motor housing 4 can be dissipated efficiently.

### (Effects of Embodiment)

As described above, in the fan 5 of the first embodiment, the frame 41 surrounding the stator 2 from outside in the radial direction and the rotating blade 6 fixed to the shaft 18 are each formed of a nonmagnetic material. Thus, the magnetic flux leakage to the outside of the fan 5 can be suppressed by the frame 41 and the rotating blade 6.

When the frame 41 and the rotating blade 6 are each formed of a resin, it is required to improve the heat dissipation. Since the frame 41 is formed of a material with higher thermal conductivity than the rotating blade 6, the heat generated in the stator 2 can be efficiently dissipated from the frame 41.

The rotation of the rotating blade 6 generates the airflow directed from the motor housing 4 toward the rotating blade 6, and thus the heat of the motor housing 4 can be dissipated efficiently using the low-temperature air.

The heat dissipation member 72 is fixed to the shaft 18 between the rotating blade 6 and the stator 2 in the axial direction, and thus the heat of the shaft 18 can be dissipated efficiently from the heat dissipation member 72 by the airflow generated by the rotating blade 6.

The fan 5 further includes the heat transfer member 71 that is in contact with both the shaft 18 and the rotating blade 6. Thus, the heat of the shaft 18 is transferred from the heat transfer member 71 to the rotating blade 6, and is efficiently dissipated from the rotating blade 6.

Since the thermal conductivity of the heat transfer member 71 is higher than that of the rotating blade 6, the heat of the shaft 18 can be more efficiently transferred to the rotating blade 6 via the heat transfer member 71, and thus the heat dissipation efficiency can be improved.

The heat transfer member 71 is in contact with the end surface 61c of the rotating blade 6 orthogonal to the axis, and thus a contact area between the shaft 18 and the rotating blade 6 can be ensured, and the heat dissipation efficiency can be improved.

The heat transfer member 71 is in contact with the inner circumferential surface 61b of the rotating blade 6 on the shaft 18 side, and thus the contact area between the shaft 18 and the rotating blade 6 can be further increased and the heat dissipation efficiency can be improved.

Since the magnet magnetic pole P1 and the virtual magnetic pole P2 in the rotor 1 face each other across the axis C1, the excitation force in the radial direction applied to the rotor 1 increases, and the frictional force generated at the bearings 31 and 32 tends to be large. Therefore, it is particularly effective to provide the heat dissipation member 72 or that heat transfer member 71 that has a heat dissipation function.

In addition, since the frame 41 and the rotating blade 6 are each formed of a resin, the magnetic flux leakage to the outside of the fan 5 can be suppressed while suppressing an increase in the manufacturing cost.

The bearing support portion 42 as the first bearing support portion is fixed to the frame 41, and the frame 41 includes the side wall 41b as the second bearing support portion. Thus, the bearings 31 and 32 can be held by the frame 41 and the bearing support portion 42.

### Second Embodiment

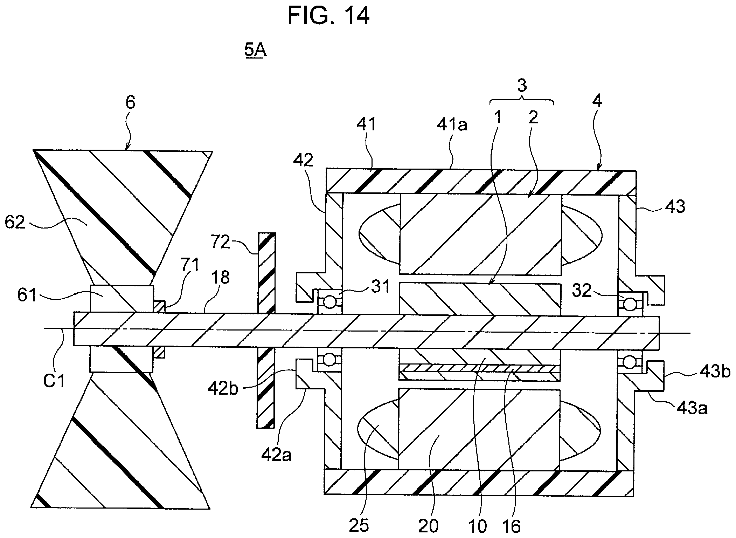

FIG. 14 is a sectional view illustrating a fan 5A of a second embodiment. In the first embodiment described above, the frame 41 of the motor housing 4 has the side wall 41b that holds the bearing 32. In contrast, in the second embodiment, a bearing support portion 43, which is a separate member from the frame 41, is configured to hold the bearing 32.

That is, the frame 41 of the second embodiment is cylindrical, and open at both ends thereof in the axial direction. The bearing support portion 42 described in the first embodiment is fixed to one end of the frame 41 in the axial direction, while the bearing support portion 43 as the second bearing support portion is fixed to the other end of the frame 41 in the axial direction. The bearing support portions 42 and 43 are fixed to the openings at both ends of the frame 41 in the axial direction, for example, by press fitting.

The cylindrical frame 41 and the two bearing support portions 42 and 43 located at both ends of the frame 41 in the axial direction form the motor housing 4.

The bearing support portion 43 has a shape symmetrical to the bearing support portion 42. An annular portion 43a for holding the bearing 32 from outside in the radial direction is formed at a center of the bearing support portion 43 in the radial direction. The annular portion 43a has an end surface portion 43b that is in contact with the end surface of the bearing 32 in the axial direction.

The frame 41 is formed of a nonmagnetic material with high thermal conductivity as described in the first embodiment. Specifically, the frame 41 is formed of a resin such as BMC. The configuration of the rotating blade 6 is as described in the first embodiment.

Since the frame 41 and the rotating blade 6 are each formed of a nonmagnetic material, the magnetic flux leakage to the outside of the fan 5 can be suppressed. In addition, since the frame 41 is made of the material with higher thermal conductivity than the rotating blade 6, the heat generated in the motor 3 can be dissipated efficiently.

The bearing support portions 42 and 43 are each formed of a magnetic material such as iron, but may be formed of a nonmagnetic material as is the case with the frame 41.

The fan 5A of the second embodiment is configured in the same manner as the fan 5 of the first embodiment except for the configuration of the motor housing 4.

As described above, in the second embodiment, the frame 41 has a cylindrical shape, and the combination of the two bearing support portions 42 and 43 and the frame 41 constitute the motor housing 4. Thus, manufacturing of the motor housing 4 is facilitated, and the manufacturing cost can be reduced.

Since the frame 41 and the rotating blade 6 are each formed of a nonmagnetic material, and the frame 41 is formed of the material with higher thermal conductivity than the rotating blade 6, the magnetic flux leakage to the outside of the fan 5 can be suppressed and the heat dissipation can be improved, as in the first embodiment.

### Third Embodiment

FIG. 15 is a sectional view illustrating a rotor 1A of a third embodiment. In the first embodiment described above, the shaft 18 is fixed to the inner circumference of the rotor core 10. In contrast, in the third embodiment, a resin portion 17 is formed between the inner circumference 10b of the rotor core 10 and the shaft 18.

The resin portion 17 is formed of a resin such as polybutylene terephthalate (PBT), for example. The resin portion 17 includes an annular inner cylindrical portion 17a fixed to the shaft 18, an annular outer cylindrical portion 17c fixed to the inner circumference 10b of the rotor core 10, and a plurality of ribs 17b connecting the inner cylindrical portion 17a and the outer cylindrical portion 17c.

The shaft 18 is fixed to the inside of the inner cylindrical portion 17a of the resin portion 17. The ribs 17b are arranged at equal intervals in the circumferential direction and extend radially outward in the radial direction from the inner cylindrical portion 17a. A hollow portion is formed between ribs 17b adjacent in the circumferential direction. In this example, the number of ribs 17b is half the number of magnetic poles, and the position of each rib 17b in the circumferential direction is aligned with the pole center of the virtual magnetic pole P2, but the number and arrangement of the ribs are not limited to the above described examples.

The fan of the third embodiment is configured in the same manner as the fan of the first embodiment except for the configuration of the rotor 1A of the motor 3.

In the third embodiment, the resin portion 17 is disposed between the rotor core 10 and the shaft 18, and thus the magnetic flux of the rotor 1 is less likely to flow into the shaft 18. Thus, the magnetic flux leakage to the outside of the fan 5 can be suppressed more effectively.

### (Air Conditioner)

Next, an air conditioner to which the motor of each of the above described embodiments is applied will be described. FIG. 16 is a diagram illustrating the configuration of an air conditioner 200 to which the motor 3 of the first embodiment is applied. The air conditioner 200 includes an outdoor unit 100, an indoor unit 201, and a refrigerant pipe 206 that connects these units 100 and 201.

The indoor unit 201 includes an indoor fan 202. The indoor fan 202 includes an impeller 203, which is, for example, a cross flow fan, a motor 204 that drives the impeller 203, and a casing 205 that houses these components.

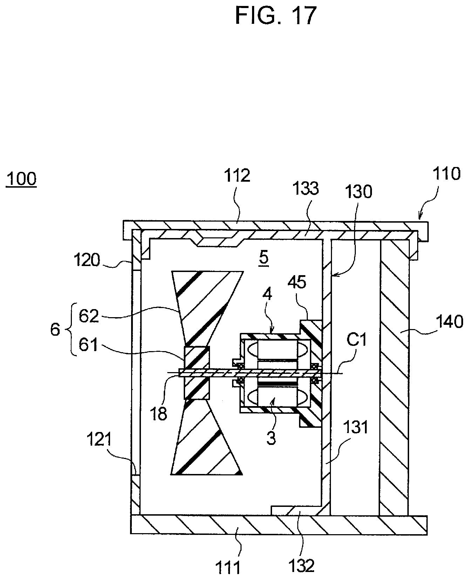

FIG. 17 is a sectional view of the outdoor unit 100, taken along the line 17-17 in FIG. 16. The outdoor unit 100 includes a casing 110, the fan 5 as the outdoor fan disposed inside the casing 110, a support body 130 that supports the fan 5, a front cover 120 disposed at a front side of the casing 110, and a heat exchanger 140 disposed at a rear side of the casing 110.

The outdoor unit 100 is placed on a horizontal plane in this example. The axial direction of the fan 5 is the front-rear direction of the outdoor unit 100. The rotating blade 6 side of the fan 5 is the front, and the heat exchanger 140 side thereof is the rear.

The casing 110 has a bottom plate 111 and a top plate 112. The front cover 120, the support body 130, and the heat exchanger 140 described above are fixed to the bottom plate 111. The front cover 120 is provided with an opening 121. A not shown grille is fitted to the opening 121.

The support body 130 has a fan fixing portion 131 that extends in the vertical direction, a pedestal portion 132 that is fixed to the bottom plate 111, and an extending portion 133 that extends forward and rearward from an upper end of the fan fixing portion 131. The extending portion 133 supports the above-described top plate 112 from below and holds the upper ends of the front cover 120 and the heat exchanger 140.

The heat exchanger 140 has a plurality of fins arranged in the left-right direction and heat transfer pipes that pass through the plurality of fins. The rotation of the rotating blade 6 of the fan 5 generates the airflow passing through the heat exchanger 140 in the axial direction. The width of the support body 130 in the left-right direction is set narrower than the width of the heat exchanger 140 so that the support body 130 does not obstruct the airflow passing through the heat exchanger 140.

The fan 5 has the configuration described in the first embodiment. In the example illustrated in FIG. 17, the motor housing 4 of the fan 5 has leg portions 45 extending outward in the radial direction from the frame 41. The motor housing 4 is fixed to the fan fixing portion 131 at the leg portions 45 by screws.

In the outdoor unit 100, the rotation of the motor 3 of the fan 5 causes the rotating blade 6 to rotate, and airflow is generated and passes through the heat exchanger 140. During a cooling operation, heat is released when the refrigerant compressed by a compressor 101 is condensed in the heat exchanger (condenser), and the heat is released to the outside of a room by air blown by the fan 5.

In the indoor unit 201 illustrated in FIG. 16, the rotation of the motor 204 of the indoor fan 202 causes the impeller 203 to rotate to blow air into the room. During the cooling operation, air deprived of heat when the refrigerant evaporates in an evaporator (not shown) is blown into the room by the indoor fan 202.

As described in the first embodiment, the magnetic flux leakage to the outside of the fan 5 can be suppressed, and thus it is possible to suppress a defect of peripheral members of the fan 5, such as distortion of the top plate 112. Further, the IATA standards can be satisfied.

Since the fan 5 has high heat dissipation effect, the fan 5 can exhibit stable blowing performance. Thus, the reliability of the operation of the outdoor unit 100 can be improved, and a stable operation of the air conditioner 200 can be achieved.

Here, the outdoor unit 100 includes the fan 5 of the first embodiment, but it is sufficient that at least one of the outdoor unit 100 and the indoor unit 201 includes the fan 5 of the first embodiment.

In place of the fan 5 of the first embodiment, the fan 5A of the second embodiment (FIG. 14) may be used, or a fan including a motor having the rotor 1A of the third embodiment (FIG. 15) may be used.

Although the desirable embodiments have been specifically described, the present disclosure is not limited to the above embodiments, and various modifications and changes can be made.

### DESCRIPTION OF REFERENCE CHARACTERS

1, 1A: rotor, 2: stator, 3: motor, 4: motor housing, 5, 5A: fan, 6: rotating blade, 10: rotor core, 11: magnet insertion hole, 12: flux barrier, 13: slit, 16: permanent magnet, 17: resin portion, 18: shaft, 20: stator core, 21: yoke, 22: tooth, 25: coil, 31: bearing (first bearing), 32: bearing (second bearing), 41: frame, 41a: circumferential wall , 41b: side wall (second bearing support portion), 42: bearing support portion (first bearing support portion), 43: bearing support portion (second bearing support portion), 61: hub, 61a: outer circumferential surface, 61b: inner circumferential surface, 61c: end surface, 62: blade, 71: heat transfer member, 72: heat dissipation member, 72a: center hole, 100: outdoor unit, 110: casing, 120: front panel, 130: support body, 140: heat exchanger, 200: air conditioner, 201: indoor unit, 202: indoor fan, 206: refrigerant pipe, 301: inner ring, 302: outer ring, 303: rolling element, 711: inner circumferential surface, 712: side end surface, 713: outer circumferential surface, 714: flange.

## Claims

1. A fan comprising:
a rotor having a shaft, a rotor core having an annular shape about a center axis of the shaft, and a permanent magnet fixed to the rotor core, the permanent magnet forming a magnet magnetic pole, a part of the rotor core forming a virtual magnetic pole;
a stator surrounding the rotor from outside in a radial direction about the center axis;
a rotating blade fixed to the shaft and formed of a nonmagnetic material; and
a frame surrounding the stator from outside in the radial direction and formed of a nonmagnetic material.

2. The fan according to claim 1, wherein a thermal conductivity of the frame is higher than a thermal conductivity of the rotating blade.

3. The fan according to claim 1 or 2, wherein, in the rotor, the magnet magnetic pole and the virtual magnetic pole face each other across the center axis.

4. The fan according to any one of claims 1 to 3, wherein the rotating blade rotates to generate airflow directed from the frame toward the rotating blade.

5. The fan according to any one of claims 1 to 4, wherein a heat dissipation member is fixed to the shaft, the heat dissipation member being located between the rotating blade and the stator in a direction of the center axis.

6. The fan according to claim 5, further comprising a heat transfer member that is in contact with both the shaft and the rotating blade.

7. The fan according to claim 6, wherein a thermal conductivity of the heat transfer member is higher than a thermal conductivity of the heat dissipation member.

8. The fan according to claim 6 or 7, wherein the heat transfer member is in contact with an end surface of the rotating blade orthogonal to the center axis.

9. The fan according to any one of claims 6 to 8, wherein the heat transfer member is in contact with an inner circumferential surface of the rotating blade on the shaft side.

10. The fan according to any one of claims 1 to 9, wherein the frame is formed of a resin, and
wherein the rotating blade is formed of a resin.

11. The fan according to any one of claims 1 to 10, further comprising a resin portion between the rotor core and the shaft.

12. The fan according to any one of claims 1 to 11, wherein a first bearing support portion that holds a first bearing supporting the shaft is fixed to the frame, and
wherein the frame has a second bearing support portion that holds a second bearing supporting the shaft.

13. The fan according to any one of claims 1 to 11, wherein a first bearing support portion that holds a first bearing supporting the shaft and a second bearing support portion that holds a second bearing supporting the shaft are fixed to the frame.

14. The fan according to claim 12 or 13, wherein the first bearing support portion is formed of a magnetic material.

15. An air conditioner comprising an outdoor unit and an indoor unit connected to the outdoor unit via a refrigerant pipe,
wherein at least one of the outdoor unit and the indoor unit has the fan according to any one of claims 1 to 14.
